# FASCICULE DE BREVET EUROPEEN

(11) **EP 3 569 828 B1**
(45) Date de publication et mention de la délivrance du brevet: **30.06.2021**
(21) Numéro de dépôt: 19173539.8
(22) Date de dépôt: 09.05.2019
(51) Int. Cl.: F01D 25/24, B29C 45/14, B29C 45/16

(54) **INSERT MÉTALLIQUE DE SURMOULAGE POUR RENFORCER LOCALEMENT UNE PIÈCE MOULÉE D'UN MOTEUR D'AÉRONEF**
METALLEINSATZ ZUM AUFFORMEN ZUR LOKALEN VERSTÄRKUNG EINES FORMTEILS EINES LUFTFAHRZEUGMOTORS
OVERMOULDING METAL INSERT FOR LOCALLY REINFORCING A MOULDED PART OF AN AIRCRAFT ENGINE

(30) Priorité: 09.05.2018 BE 201805301
(43) Date de publication de la demande: 20.11.2019
(73) Titulaire: Safran Aero Boosters S.A., 4041 Herstal (BE)
(72) Inventeur: RENOUARD, Loic, 4041 Herstal (Milmort) (BE); PAUTARD, Sébastien, 91120 Palaiseau (FR); WIKTOROWICZ, Marine, 4041 Herstal (Milmort) (BE)
(74) Mandataire: Gevers Patents

(56) Documents cités:
- EP-A1- 1 828 554
- EP-A1- 2 316 632
- EP-A2- 2 474 712
- WO-A1-2016/030614
- CN-A- 106 738 936
- JP-A- H03 272 828

## Description

### DOMAINE TECHNIQUE

La présente invention concerne un insert métallique de surmoulage pour renforcer localement une pièce moulée d'un moteur d'aéronef, une pièce renforcée comportant un tel insert, ainsi qu'un procédé de fabrication de cette pièce.

### ETAT DE L'ART

Il est avantageux de réduire la masse d'un moteur d'aéronef pour améliorer les performances de ce moteur. Pour cela, il est connu de remplacer des pièces métalliques par des pièces plus légères par exemple en matériau composite.

La présente invention concerne plus spécifiquement les pièces non métalliques de moteur d'aéronef, qui sont réalisées par moulage.

Bien que ce type de pièces soit intéressant pour leur faible masse, elles présentent en général une résistance mécanique et une rigidité plus faibles qu'une pièce métallique similaire. Lorsqu'une pièce non métallique est fixée sur une autre pièce du moteur au moyen d'éléments de fixation du type vis-écrou ou analogues, il existe un risque d'endommager localement la pièce non métallique lors de l'application du couple de serrage.

Pour remédier à cet inconvénient, il serait possible de prévoir un insert dans l'orifice de la pièce, qui serait prévu pour renforcer localement la pièce et améliorer la répartition et la transmission des efforts de serrage lors de la fixation de la pièce.

Le document EP 2 316 632 A1 divulgue un insert comprenant un fût tubulaire dont un tronçon axial est fileté intérieurement de façon à former un taraudage. Afin de préserver celui-ci d'une détérioration ou déformation lors du surmoulage de l'insert, deux zones fusibles déformables sous un effort axial de compression sont prévus axialement de part et d'autre du tronçon. La répartition et la transmission des efforts de serrage lors de la fixation de pièce, après le surmoulage de cet insert, sont toutefois limitées.

La présente invention propose un perfectionnement qui permet de répondre de manière simple et efficace au problème ci-dessus.

### EXPOSE DE L'INVENTION

L'invention propose à cet effet un insert métallique de surmoulage pour renforcer localement une pièce moulée d'un moteur d'aéronef, cet insert ayant une symétrie de révolution autour d'un axe et comportant un alésage axial de passage d'un élément de fixation, caractérisé en ce qu'il comprend :
- à l'une de ses extrémités axiales, un premier rebord annulaire externe ledit premier rebord comportant au moins une surface tronconique destinée à coopérer avec ledit élément de fixation ou ladite pièce ;
- à une autre de ses extrémités axiales, un second rebord annulaire externe tel que lesdits premier et second rebords annulaires externes définissent entre eux une gorge annulaire externe de réception d'une partie de ladite pièce; et ledit premier rebord comprend une première surface tronconique externe recouvrant ladite partie de la pièce.

L'insert selon l'invention permet, grâce à sa forme optimisée, de limiter les effets des contraintes liées au comportement de l'insert et de la pièce moulée lors de variations de température. En effet l'insert et la pièce moulée comprenant des matériaux constitutifs différents, ils possèdent des coefficients de dilatation thermique qui pour une même variation de température vont présenter des dilatations (positive ou négative) différentes et ainsi engendrer des contraintes. En particulier la forme tronconique d'une surface de l'insert en contact avec la pièce a été optimisée pour permettre une bonne répartition des contraintes de serrage lors de la fixation ainsi que de limiter, voir de supprimer, les contraintes liées à la différence d'expansion thermique. La forme tronconique de la surface du premier rebord (et/ou une forme optionnellement tronconique d'une surface du deuxième rebord) permet d'optimiser la répartition des contraintes de serrage lors de la fixation de la pièce par l'élément de fixation.

L'insert selon l'invention est typiquement d'un seul tenant et permet, grâce à sa forme optimisée, de garantir son maintien dans la pièce moulée. Ce maintien est notamment assuré par les premier et deuxième rebords à ses extrémités axiales opposées définissant la gorge et permettant un ancrage optimal de l'insert dans le matériau surmoulé de la pièce. La gorge est de préférence destinée à recevoir un bord périphérique de la pièce moulée obtenue par surmoulage sur l'insert.

L'insert est particulièrement avantageux en ce qu'il est un insert métallique de surmoulage. En particulier, l'insert selon l'invention est de préférence destiné à être positionnée dans un moule dans lequel est coulé un matériau, de façon à former la pièce moulée à laquelle est solidarisée l'insert. En d'autres termes, et tel qu'il est connu de la terminologie d'un homme du métier, la pièce est « surmoulée » autour de l'insert. Ce procédé de surmoulage est également décrit dans l'exposé de l'invention et dans la description détaillée. Dans le cadre de ce document, l'insert est métallique alors que la matériau coulé est de préférence réalisée dans un matériau distinct de l'insert. L'insert selon l'invention permet une grande réduction des contraintes sur le matériau dans lequel l'insert est surmoulé. De plus l'insert de l'invention permet de réduire les contraintes de cisaillement entre l'insert et la pièce dans laquelle l'insert est surmoulé.

L'insert selon l'invention peut comprendre une ou plusieurs des caractéristiques suivantes, prises isolément les unes des autres ou en combinaison les unes avec les autres :
- ladite au moins une surface tronconique décrit un angle de cône (α) qui est compris entre 60° et 120° et plus préférentiellement compris entre 80° et 100°,
- ledit second rebord s'étend sensiblement dans un plan perpendiculaire audit axe,
- ledit premier rebord comprend une seconde surface tronconique interne sur laquelle est destiné à prendre appui ledit élément de fixation,
- lesdites première et seconde surfaces tronconiques ont un même angle de cône qui est compris entre 60 et 120° et plus préférentiellement compris entre 80° et 100°,
- lesdits premier et second rebords comprennent des diamètres externes sensiblement identiques,
- la surface périphérique externe de la partie médiane de l'insert comprend au moins l'une des caractéristique suivantes : la surface est moletée, la surface est texturée, la surface a une rugosité,
- la surface périphérique externe de la partie médiane de l'insert est dotée d'un méplat.

La présente invention concerne également une pièce renforcée d'un moteur d'aéronef, comportant une pièce moulée comprenant au moins un orifice de passage d'un élément de fixation dans lequel est logé un insert tel que décrit ci-dessus.

Avantageusement, la pièce moulée est réalisée dans un matériau thermoplastique ou dans un matériau composite à matrice thermoplastique. La pièce moulée peut par exemple être réalisée dans un matériau thermodurcissable ou dans un matériau composite à matrice thermodurcissable.

L'avantage que la surface périphérique externe de la partie médiane de l'insert soit moletée, texturée, rugueuse ou soit dotée d'un méplat permet une amélioration de l'assemblage de l'insert dans la pièce, en particulier, ces caractéristiques permettent une meilleure adhésion de l'insert dans la pièce conduisant ainsi à un meilleur maintien de l'insert dans la pièce. En particulier un bon maintien de l'insert dans la pièce est nécessaire afin que l'insert ayant une forme extérieure essentiellement tronconique ne puisse pas commencer à tourner dans la pièce. Les caractéristiques de la surface périphérique externe permettent une : une meilleure résistance à l'arrachement de l'insert dans la pièce ainsi qu'une meilleure adhésion de l'insert dans l'alésage qui lui est prévu dans la pièce. Une telle rotation de l'insert peut survenir lors du serrage de l'élément de fixation, en particulier lors de l'application d'un couple de serrage important ainsi que pendant l'utilisation de l'assemblage comprenant l'insert.

De préférence, lesdites première et seconde surfaces tronconiques ont un même angle de cône qui est fonction du couple de serrage que l'on souhaite appliquer aux moyens de l'élément de fixation.

La pièce forme par exemple un flasque annulaire.

La présente invention concerne également un procédé de fabrication d'une pièce renforcée telle que décrite ci-dessus, comportant les étapes consistant à positionner au moins un insert dans un moule puis injecter un matériau fondu dans le moule de façon à surmouler la pièce autour dudit au moins un insert.

De préférence, la fabrication de la pièce renforcée est réalisée par l'injection d'un matériau thermoplastique fondu dans le moule. Par exemple ce mode de réalisation permet d'obtenir une pièce renforcée comprenant un matériau composite à matrice thermoplastique.

Par exemple, l'insert est surmoulé ou inséré sous-pression à chaud ou sous-pression avec vibrations. Par exemple les vibrations sont de type ultrasons.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique partielle en coupe axiale de deux pièces d'un moteur d'aéronef, qui sont fixées ensemble par un élément de fixation du type vis-écrou ;
- la figure 2 est une vue schématique en perspective avec arrachement partiel d'un insert et d'une pièce renforcée selon l'invention, cette pièce étant fixée sur une autre pièce par un élément de fixation du type vis-écrou ;
- la figure 3 est une demi vue schématique partielle en coupe axiale et à plus grande échelle de l'assemblage de la figure 2 ;
- la figure 4 est une vue schématique en perspective d'une variante de réalisation d'un insert selon l'invention ;
- la figure 5 est une vue similaire à celle de la figure 3 et montrant l'insert de la figure 4 dans un assemblage du type de celui de la figure 2 ;
- la figure 6 est une vue schématique en perspective d'une autre variante de réalisation d'un insert selon l'invention ;
- la figure 7 est une vue similaire à celle de la figure 3 et montrant l'insert de la figure 6 dans un assemblage du type de celui de la figure 2 ; la figure 8 est une vue similaire à celle de la figure 3 et montrant un example qui ne fait pas partie de l'invention ; et
- les figures et 10 sont des vues similaires à celles de la figure 3 et illustrant d'autres variantes de réalisation d'un insert selon l'invention.

### DESCRIPTION DETAILLEE

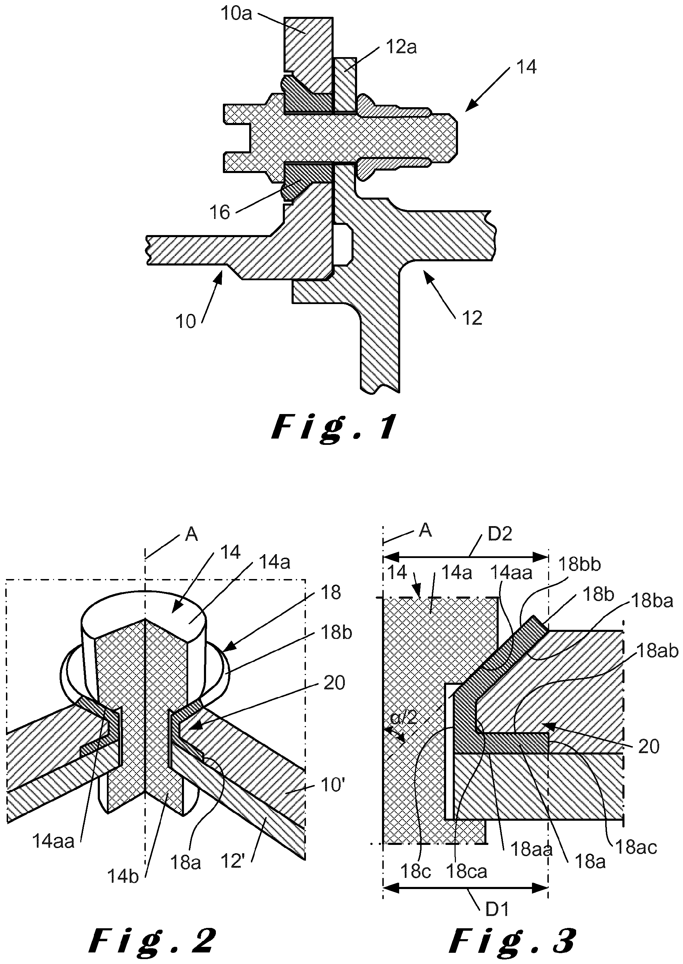

La figure 1 montre de manière schématique une zone de fixation de deux pièces 10, 12 d'un moteur d'aéronef, ce moteur étant par exemple un turboréacteur ou un turbopropulseur.

Les pièces 10, 12 peuvent être quelconques et sont par exemple des pièces annulaires s'étendant autour d'un axe qui peut être l'axe longitudinal du moteur et en particulier l'axe de rotation de son rotor principal ou ses rotors principaux.

Les pièces 10, 12 comportent des brides annulaires 10a, 12a, en général à leur périphérie externe, qui sont appliquées axialement l'une contre l'autre et serrées axialement l'une contre l'autre au moyen d'au moins un élément de fixation 14 qui est ici un boulon ou un ensemble vis-écrou.

Les brides 10a, 12a comportent des orifices axiaux qui sont alignés et reçoivent l'élément de fixation 14. Lorsque les pièces 10, 12 sont métalliques, la tête 14a de l'élément de fixation prend appui axialement sur l'une des brides et l'écrou 14b est vissé et prend appui axialement sur l'autre des brides.

Comme évoqué dans ce qui précède, bien que les pièces métalliques soient aptes à résister au couple de serrage d'un élément de fixation, ce n'est pas le cas de pièces non métalliques. L'application d'un couple de serrage sur un élément de fixation qui prendrait directement appui sur une telle pièce non métallique risquerait de générer des contraintes importantes dans la pièce, susceptibles d'entrainer des fissures ou criques.

Il est donc connu de renforcer localement la zone de fixation d'une telle pièce par un insert 16 qui est monté dans l'orifice de passage de l'élément de fixation de la pièce non métallique, et qui est destiné à renforcer la zone afin que la pièce résiste aux contraintes de serrage.

Les figures 2 et suivantes illustrent des variantes de réalisation d'un insert 18 perfectionné selon l'invention. Cet insert 18 a une symétrie de révolution autour d'un axe A et comporte un alésage axial de passage d'un élément de fixation 14. Par ailleurs, l'insert 18 comprend à ses extrémités axiales des premier et second rebords annulaires externes 18b, 18a qui définissent entre eux une gorge annulaire externe 20. L'insert a ainsi une forme générale en « diabolo », par référence au jeu du même nom, et en demi section axiale une forme en U ou C, visible à la figure 3.

Le second rebord 18a, ici inférieur, s'étend sensiblement dans un plan perpendiculaire à l'axe A. Ce rebord 18a a ici une épaisseur sensiblement constante et un diamètre externe noté D1.

Le premier rebord 18b, ici supérieur, a une forme générale tronconique et comprend une première surface tronconique externe 18ba et une seconde surface tronconique interne 18bb sur laquelle est destiné à prendre appui l'élément de fixation 14. Le rebord 18b a ici une épaisseur sensiblement constante et un diamètre externe noté D2. Chacune des surfaces 18ba, 18bb a un angle de cône noté α, le demi angle α/2 étant représenté à la figure 3. D1 et D2 peuvent être sensiblement identiques.

La partie médiane 18c de l'insert, s'étendant entre les rebords 18a, 18b, a une forme générale cylindrique d'axe A. Cette partie 18c a une épaisseur sensiblement constante, qui est sensiblement identique à l'épaisseur des rebords 18a, 18b.

Comme on le voit aux figures 2 et 3, la gorge 20 définie par l'insert est destinée à recevoir un bord périphérique de la pièce 10', qui est une pièce obtenue par moulage et plus particulièrement par surmoulage sur l'insert.

La surface inférieure 18aa du rebord 18a est destinée à être alignée avec la surface inférieure de la pièce 10'. La surface périphérique externe 18ac et la surface supérieure 18ab du rebord 18a sont destinées à être au contact de la matière surmoulée de la pièce 10'. Enfin, la surface périphérique externe 18ca de la partie médiane 18c et la surface 18ba sont destinées à être au contact également de cette matière.

L'élément de fixation 14 peut être un boulon comportant une vis dont la tête 14a peut prendre appui par une surface tronconique 14aa sur la surface 18bb de l'insert. L'écrou 14b vissé sur la tige filetée de la vis prend appui sur une surface, ici inférieure, d'une pièce métallique 12', dont la surface supérieure reçoit la pièce surmoulée 10'.

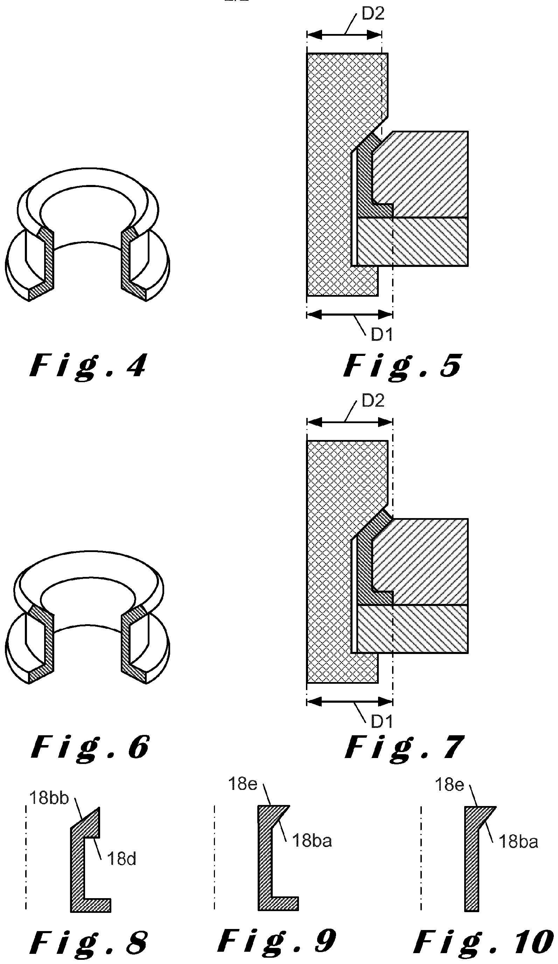

Les figures 4 à 9 illustrent des variantes de réalisation de l'insert. L'insert dans ces figures a une forme générale similaire à celle décrite dans ce qui précède, et en diffère par les paramètres D1 et D2.

Aux figures 4 et 5, l'insert a un diamètre D1 inférieur à D2, et qui sont inférieurs aux mêmes diamètres du précédent mode de réalisation.

Aux figures 6 et 7, l'insert a des diamètres D1 et D2 qui sont sensiblement identiques mais qui sont également inférieurs aux mêmes diamètres du premier mode de réalisation.

Dans l'exemple de la figure 8, la surface 18ba de l'insert est remplacée par une surface 18d sensiblement perpendiculaire à l'axe A.

Dans la variante de réalisation de la figure 9, la surface 18bb de l'insert 18 est remplacée par une surface 18e essentiellement perpendiculaire à l'axe A. Dans ce cas, la tête 14a de la vis prendrait appui axialement sur la surface 18e.

La figure 10 montre un autre mode de réalisation possible de l'insert 18 de l'invention où la partie du bas de l'insert 18 ne comprend pas de portion horizontale, essentiellement perpendiculaire à l'axe A.

L'insert 18 et la pièce 10' sont assemblés par surmoulage. Pour cela, l'insert 18 est positionné dans une zone précise à l'intérieur d'un moule de réalisation de la pièce 10', ce moule comportant par exemple un doigt engagé dans l'insert 18 et destiné à définir le passage de l'élément de fixation 14. Un matériau fondu à base de thermoplastique est injecté dans le moule et s'écoule autour de l'insert et dans sa gorge 20 pour assurer la solidarisation de l'insert à la pièce après durcissement du matériau thermoplastique.

## Revendications

1. Insert (18) métallique de surmoulage pour renforcer localement une pièce moulée (10') d'un moteur d'aéronef, cet insert (18) ayant une symétrie de révolution autour d'un axe (A) et comportant un alésage axial de passage d'un élément de fixation (14),
**caractérisé en ce qu'**il comprend :
- à l'une de ses extrémités axiales, un premier rebord annulaire externe (18b), ledit premier rebord (18b) comportant au moins une surface tronconique (18ba ; 18bb) destinée à coopérer avec ledit élément de fixation (14) ou ladite pièce (10') ;
- à une autre de ses extrémités axiales, un second rebord annulaire externe (18a) tel que lesdits premier et second rebords annulaires externes (18b, 18a) définissent entre eux une gorge annulaire externe (20) de réception d'une partie de ladite pièce ;
et **en ce que** ledit premier rebord (18b) comprend une première surface tronconique externe (18ba) recouvrant ladite partie de la pièce.

2. Insert (18) selon la revendication 1, dans lequel ladite au moins une surface tronconique (18ba ; 18bb) décrit un angle de cône (α) qui est compris entre 60° et 120° et plus préférentiellement compris entre 80° et 100°.

3. Insert (18) selon l'une quelconque des revendications précédentes, dans lequel ledit second rebord (18a) s'étend sensiblement dans un plan perpendiculaire audit axe (A).

4. Insert (18) selon l'une quelconque des revendications précédentes, dans lequel ledit premier rebord (18b) comprend une seconde surface tronconique interne (18bb) sur laquelle est destiné à prendre appui ledit élément de fixation (14).

5. Insert (18) selon la revendication précédente, dans lequel lesdites première et seconde surfaces tronconiques (18ba, 18bb) ont un même angle de cône (α) qui est compris entre 60 et 120°.

6. Insert (18) selon l'une quelconque des revendications précédentes, dans lequel lesdits premier et second rebords (18b, 18a) comprennent des diamètres externes (D1, D2) sensiblement identiques.

7. Insert (18) selon l'une quelconque des revendications précédentes, **caractérisé en ce qu'**il comprend une partie médiane cylindrique (18c) s'étendant autour de l'axe (A), entre lesdits premier et second rebords annulaires externes (18b, 18a), et **en ce qu'**une épaisseur de ladite partie médiane cylindrique et desdits premier et second rebords annulaires externes (18b, 18a) est essentiellement constante.

8. Insert (18) selon la revendication précédente, **caractérisé en ce qu'**une surface périphérique de ladite partie médiane cylindrique (18c) est moletée et/ou est texturée et/ou a une rugosité.

9. Insert (18) selon l'une quelconque des deux revendications précédentes, **caractérisé en ce qu'**un diamètre circulaire dudit alésage axial est sensiblement plus grand que ladite épaisseur.

10. Pièce renforcée d'un moteur d'aéronef, comportant une pièce moulée (10') comprenant au moins un orifice de passage d'un élément de fixation (14) dans lequel est logé un insert (18) selon l'une quelconque des revendications précédentes.

11. Pièce selon la revendication précédente, dans laquelle la pièce moulée (10') est réalisée dans un matériau thermoplastique ou dans un matériau composite à matrice thermoplastique.

12. Pièce selon l'une quelconque des deux revendications précédentes, dans laquelle elle forme un flasque annulaire.

13. Procédé de fabrication d'une pièce renforcée selon l'une quelconque des revendications 10 à 12, comportant les étapes consistant à positionner au moins un insert (18) dans un moule puis injecter un matériau fondu dans le moule de façon à surmouler la pièce (10') autour dudit au moins un insert (18).

## Patentansprüche

1. Metalleinsatz (18) zum Aufformen zur lokalen Verstärkung eines Formteils (10') eines Luftfahrzeugmotors, wobei dieser Einsatz (18) eine Drehsymmetrie um eine Achse (A) herum aufweist und eine Axialbohrung zum Durchführen eines Befestigungselements (14) umfasst,
**dadurch gekennzeichnet, dass** er umfasst:
- an einem seiner axialen Enden, einen ersten äußeren ringförmigen Rand (18b), wobei der erste Rand (18b) mindestens eine kegelstumpfförmige Oberfläche (18ba; 18bb) umfasst, die dazu vorgesehen ist, mit dem Befestigungselement (14) oder dem Teil (10') zusammenzuwirken;
- an einem anderen seiner axialen Enden, einen zweiten äußeren ringförmigen Rand (18a), sodass der erste und der zweite äußere ringförmige Rand (18b, 18a) untereinander eine äußere ringförmige Nut (20) zur Aufnahme eines Abschnitts des Teils definieren;
und dadurch, dass der erste Rand (18b) eine erste äußere kegelstumpfförmige Oberfläche (18ba) umfasst, die den Abschnitt des Teils bedeckt.

2. Einsatz (18) nach Anspruch 1, wobei die mindestens eine kegelstumpfförmige Oberfläche (18ba; 18bb) einen Kegelwinkel (a) beschreibt, der zwischen 60° und 120° umfasst ist und bevorzugter zwischen 80° und 100° umfasst ist.

3. Einsatz (18) nach einem der vorstehenden Ansprüche, wobei der zweite Rand (18a) sich im Wesentlichen in einer zur Achse (A) senkrechten Ebene erstreckt.

4. Einsatz (18) nach einem der vorstehenden Ansprüche, wobei der erste Rand (18b) eine zweite innere kegelstumpfförmige Oberfläche (18bb) umfasst, auf der das Befestigungselement (14) zur Auflage kommen soll.

5. Einsatz (18) nach dem vorstehenden Anspruch, wobei die erste und die zweite kegelstumpfförmige Oberfläche (18ba, 18bb) einen gleichen Kegelwinkel (a) aufweisen, der zwischen 60° und 120° umfasst ist.

6. Einsatz (18) nach einem der vorstehenden Ansprüche, wobei der erste und der zweite Rand (18b, 18a) im Wesentlichen identische Außendurchmesser (D1, D2) umfassen.

7. Einsatz (18) nach einem der vorstehenden Ansprüche, **dadurch gekennzeichnet, dass** er einen zylindrischen Mittelabschnitt (18c) umfasst, der sich um die Achse (A) herum zwischen dem ersten und dem zweiten äußeren ringförmigen Rand (18b, 18a) erstreckt und dadurch, dass eine Dicke des zylindrischen Mittelabschnitts und des ersten und des zweiten äußeren ringförmigen Rands (18b, 18a) im Wesentlichen konstant ist.

8. Einsatz (18) nach dem vorstehenden Anspruch, **dadurch gekennzeichnet, dass** eine Umfangsoberfläche des zylindrischen Mittelabschnitts (18c) gerändelt ist und/oder strukturiert ist und/oder eine Rauigkeit aufweist.

9. Einsatz (18) nach einem der vorstehenden Ansprüche, **dadurch gekennzeichnet, dass** ein Kreisdurchmesser der Axialbohrung wesentlich größer ist als die Dicke.

10. Verstärktes Teil eines Luftfahrzeugmotors, umfassend ein Formteil (10'), das mindestens eine Öffnung zum Durchführen eines Befestigungselements (14) umfasst, in der ein Einsatz (18) nach einem der vorstehenden Ansprüche untergebracht ist.

11. Teil nach dem vorstehenden Anspruch, wobei das Formteil (10') in einem thermoplastischen Material und in einem Verbundmaterial mit thermoplastischer Matrix gefertigt ist.

12. Teil nach einem der beiden vorstehenden Ansprüche, wobei es einen ringförmigen Flansch bildet.

13. Verfahren zur Herstellung eines verstärkten Teils nach einem Ansprüche 10 bis 12, umfassend die Schritte, die im Positionieren mindestens eines Einsatzes (18) in einer Form, dann Einspritzen eines geschmolzenen Materials in die Form, um das Teil (10') um den mindestens einen Einsatz (18) herum aufzuformen, bestehen.

## Claims

1. Overmoulding metal insert (18) for locally reinforcing a moulded part (10') of an aircraft engine, this insert (18) having symmetry of revolution around an axis (A) and comprising an axial bore for an attachment element (14) to pass,
**characterised in that** it comprises:
- at one of the axial ends thereof, a first outer annular rim (18b), said first rim (18b) comprising at least one frustoconical surface (18ba; 18bb) intended to cooperate with said attachment element (14) or said part (10');
- at another of the axial ends thereof, a second outer annular rim (18a) such that said first and second outer annular rims (18b, 18a) define between them an outer annular groove (20) for receiving a portion of said part;
and **in that** said first rim (18b) comprises a first outer frustoconical surface (18ba) covering said portion of the part.

2. Insert (18) according to claim 1, wherein said at least one frustoconical surface (18ba; 18bb) describes a cone angle (α) that lies between 60° and 120° and more preferentially lies between 80° and 100°.

3. Insert (18) according to any one of the preceding claims, wherein said second rim (18a) extends substantially in a plane perpendicular to said axis (A).

4. Insert (18) according to any one of the preceding claims, wherein said first rim (18b) comprises a second inner frustoconical surface (18bb) on which said attachment element (14) is intended to bear.

5. Insert (18) according to the preceding claim, wherein said first and second frustoconical surfaces (18ba, 18bb) have the same cone angle (α) that lies between 60 and 120°.

6. Insert (18) according to any one of the preceding claims, wherein said first and second rims (18b, 18a) comprise substantially identical outside diameters (D1, D2).

7. Insert (18) according to any one of the preceding claims, **characterised in that** it comprises a cylindrical median part (18c) extending around the axis (A), between said first and second outer annular rims (18b, 18a), and **in that** a thickness of said cylindrical median part and of said first and second outer annular rims (18b, 18a) is essentially constant.

8. Insert (18) according to the preceding claim, **characterised in that** a peripheral surface of said cylindrical median part (18c) is knurled and/or is textured and/or has roughness.

9. Insert (18) according to either one of the preceding two claims, **characterised in that** a circular diameter of said axial bore is substantially greater than said thickness.

10. Reinforced part of an aircraft engine, comprising a moulded part (10') comprising at least one orifice for an attachment element (14) to pass, wherein an insert (18) according to any one of the preceding claims is housed.

11. Part according to the preceding claim, wherein the moulded part (10') is produced from a thermoplastic material or from a composite material with a thermoplastic matrix.

12. Part according to either one of the preceding two claims, wherein it forms an annular flange.

13. Method for manufacturing a reinforced part according to any one of claims 10 to 12, comprising the steps consisting of positioning at least one insert (18) in a mould and then injecting a molten material into the mould so as to overmould the part (10') around said at least one insert (18).
